(19) Europäisches Patentamt
European Patent Office
Office européen des brevets

(11) **EP 3 678 088 B1**

(12) **EUROPEAN PATENT SPECIFICATION**

(45) Date of publication and mention of the grant of the patent:
**09.08.2023 Bulletin 2023/32**

(21) Application number: **20150187.1**

(22) Date of filing: **03.01.2020**

(51) International Patent Classification (IPC):
**G06T 5/20** (2006.01)  **G06N 3/08** (2023.01)
**G06N 3/045** (2023.01)

(52) Cooperative Patent Classification (CPC):
**G06T 5/20; G06N 3/045; G06N 3/08;**
G06T 2207/20084

(54) **METHOD AND SYSTEM OF CONVOLUTION IN NEURAL NETWORK WITH VARIABLE DILATION RATE**

VERFAHREN UND SYSTEM ZUR FALTUNG IN NEURONALEM NETZWERK MIT VARIABLER DILATIONSRATE

PROCÉDÉ ET SYSTÈME DE CONVOLUTION DANS UN RÉSEAU NEURONAL AVEC DÉBIT DE DILATATION VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.01.2019 IN 201941000324**
**27.12.2019 IN 201941000324**

(43) Date of publication of application:
**08.07.2020 Bulletin 2020/28**

(73) Proprietor: **Samsung Electronics Co., Ltd.**
**Gyeonggi-do 16677 (KR)**

(72) Inventors:
• **YADAV, Dinesh Kumar**
**16678 Suwon-si, Gyeonggi-do (KR)**
• **DESHWAL, Ankur**
**16678 Suwon-si, Gyeonggi-do (KR)**
• **DAS, Saptarsi**
**16678 Suwon-si, Gyeonggi-do (KR)**
• **JANG, Junwoo**
**16678 Suwon-si, Gyeonggi-do (KR)**
• **LEE, Sehwan**
**16678 Suwon-si, Gyeonggi-do (KR)**

(74) Representative: **Grünecker Patent- und Rechtsanwälte**
**PartG mbB**
**Leopoldstraße 4**
**80802 München (DE)**

(56) References cited:
**WO-A1-2018/081089     US-B1- 10 067 509**

• LIANG-CHIEH CHEN ET AL: "DeepLab: Semantic Image Segmentation with Deep Convolutional Nets, Atrous Convolution, and Fully Connected CRFs", ARXIV.ORG, CORNELL UNIVERSITY LIBRARY, 201 OLIN LIBRARY CORNELL UNIVERSITY ITHACA, NY 14853, 2 June 2016 (2016-06-02), XP080705599,
• Fisher Yu ET AL: "Multi-Scale Context Aggregation by Dilated Convolutions", , 30 April 2016 (2016-04-30), XP055557909, Retrieved from the Internet: URL:https://arxiv.org/pdf/1511.07122.pdf [retrieved on 2020-04-29]
• MO ZHANG ET AL: "ASCNet: Adaptive-Scale Convolutional Neural Networks for Multi-Scale Feature Learning", ARXIV.ORG, CORNELL UNIVERSITY LIBRARY, 201 OLIN LIBRARY CORNELL UNIVERSITY ITHACA, NY 14853, 7 July 2019 (2019-07-07), XP081438922,

## Description

### TECHNICAL FIELD

The present disclosure relates to dilated convolution. Particularly, but not exclusively, the present disclosure relates to method of performing convolution in neural network with variable dilation rate.

### BACKGROUND

Generally, dilated convolution technique is used in deep learning neural network for performing scene segmentation and molecular depth estimation in an input image or an input video. The dilated convolution provides accurate results as compared to un-dilated convolution technique. A convolution technique involves computing a dot product between the one or more values of a kernel with one or more values of the input image. The dot product is computed across the width and height of the input image. In case of dilated convolution, the one or more values of a dilated kernel is obtained by inserting zeros between the one or more values of the kernel in a x-direction and a y-direction. The number of zeros inserted to obtain the dilated kernel is based on a dilation rate. The convolution of the dilated kernel with the input image includes multiplication of the one or more values of the input image with the inserted zeros in the dilated kernel. Therefore, eliminating the multiplication of the one or more values of the input image with the inserted zeros in the dilated kernel reduces the time required to compute an output of the convolution and results is faster processing of the input image or the input video.

An existing technique, disintegrates the dilated kernel into plurality of small kernels and add the output of convolution of the input image with the each of the plurality of small kernels. An issue with the existing technique is the size of the plurality of small kernels is same irrespective of the dilation rate. Another issue with the existing techniques is, a count of the plurality of small kernels increases with increase in the dilation rate.

The information disclosed in this background of the disclosure section is only for enhancement of understanding of the general background of the invention and should not be taken as an acknowledgement or any form of suggestion that this information forms the prior art already known to a person skilled in the art.

Chen et al.: "DeepLab: Semantic Image Segmentation with Deep Convolutional Nets, Atrous Convolution, and Fully Connected CRFS", XP080705599, relates to the task of semantic image segmentation with Deep Learning. Convolution with upsampled filters, or 'atrous convolution', is highlighted as a powerful tool in dense prediction tasks. Atrous convolution allows to explicitly control the resolution at which feature responses are computed within Deep Convolutional Neural Networks. It also allows to effectively enlarge the field of view of filters to incorporate larger context without increasing the number of parameters or the amount of computation. Further, atrous spatial pyramid pooling (ASPP) is proposed to robustly segment objects at multiple scales. ASPP probes an incoming convolutional feature layer with filters at multiple sampling rates and effective fields-of-views, thus capturing objects as well as image context at multiple scales.

WO 2018/081089 A1 relates to methods and systems for neural machine translation that comprises a dilated convolutional neural network configured to process the input sequence of source embeddings representing a source sequence of words in a source natural language to generate an output sequence of target embeddings representing a target sequence of words that is a translation of the source sequence into a target natural language.

US 10 067 509 B1 discloses a system and method for occluding contour detection using a fully convolutional neural network. A particular embodiment includes: receiving an input image; producing a feature map from the input image by semantic segmentation; applying a Dense Upsampling Convolution (DUC) operation on the feature map to produce contour information of objects and object instances detected in the input image; and applying the contour information onto the input image.

Yu et al.: "Multi-Scale Context Aggregation by Dilated Convolutions", XP05557909, refers to the development of a new convolutional network module that is specifically designed to increase the accuracy of state-of-the-art semantic segmentation systems. For this purpose, dilated convolutions are used to systematically aggregate multi-scale contextual information without losing resolution. The architecture is based on the fact that dilated convolutions support exponential expansion of the receptive field without loss of resolution or coverage.

It is the object of the present application to provide a system and a method for performing a convolution of an image with a variable dilation rate in an efficient way.

This object is solved by the subject matter of the independent claims.

Preferred embodiments are defined in the dependent claims.

### SUMMARY

Additional features and advantages are realized through the techniques of the present disclosure. Other embodiments and aspects of the disclosure are described in detail herein and are considered a part of the claimed disclosure.

Disclosed herein is a method of convolution in a neural network with variable dilation rate, the method includes receiving size of a first kernel, and a dilation rate. Further, the method includes determining at least one of size of one or more disintegrated kernels based on at least one of the size of the first kernel, a baseline architecture of a memory associated with the computing system and the dilation rate. Furthermore, the method includes determining address of one or more blocks of an input image corresponding to each of the one or more disintegrated kernels based on the dilation rate, and one or more parameters associated with a size of the input image and the memory. Thereafter, the method includes fetching the one or more blocks of the input image based on the address and the one or more disintegrated kernels from the memory. Finally, the method includes obtaining an output image based on convolution of each of the one or more disintegrated kernels and the one or more blocks of the input image.

Embodiments of the present disclosure discloses a computing system, for performing convolution in a neural network with variable dilation rate, the computing system including a processor, and a memory communicatively coupled to the processor, wherein the memory stores the processor-executable instructions, which, on execution, causes the processor to receive size of a first kernel, and a dilation rate. Further, the processor is configured to determine at least one of at least one of size of one or more disintegrated kernels based on at least one of the size of the first kernel, a baseline architecture of the memory associated and the dilation rate. Furthermore, the processor is configured to determine address of one or more blocks of an input image corresponding to each of the one or more disintegrated kernels based on the dilation rate, and one or more parameters associated with a size of the input image and the memory. Thereafter, the processor is configured to fetch the one or more blocks of the input image based on the address and the one or more disintegrated kernels from the memory. Finally, the processor is configured to obtain an output image based on convolution of each of the one or more disintegrated kernels and the one or more blocks of the input image.

The foregoing summary is illustrative only and is not intended to be in any way limiting. In addition to the illustrative aspects, embodiments, and features described above, further aspects, embodiments, and features may become apparent by reference to the drawings and the following detailed description.

## BRIEF DESCRIPTION OF THE ACCOMPANYING DRAWINGS

The novel features and characteristic of the disclosure are set forth in the appended claims. The disclosure itself, however, as well as a preferred mode of use, further objectives and advantages thereof, may best be understood by reference to the following detailed description of an illustrative embodiment when read in conjunction with the accompanying drawings. The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. One or more embodiments are now described, by way of example only, with reference to the accompanying figures wherein like reference numerals represent like elements and in which:

FIGURE 1A shows an exemplary convolution of an input image with a first kernel to generate an output image, in accordance with some embodiments of the present disclosure;

FIGURE 1B shows an exemplary computation of dot product between the plurality of pixel values of an input image with one or more kernel values of a first kernel to generate the plurality of pixel values of an output image, in accordance with some embodiments of the present disclosure;

FIGURE 1C shows an exemplary convolution of an input image with a first kernel to generate the output image with a stride of "2", in accordance with some embodiments of the present disclosure;

FIGURE 1D shows an exemplary input image padded with zeros, in accordance with some embodiments of the present disclosure;

FIGURE 2A shows a detailed block diagram of a computing system, in accordance with some embodiments of the present disclosure;

FIGURE 2B shows an exemplary input image grouped into one or more blocks, in accordance with some embodiments of the present disclosure;

FIGURE 3 shows a flowchart illustrating method steps for convolution in a neural network with variable dilation rate, in accordance with some embodiment of the present disclosure;

**FIGURE 4A** shows an exemplary illustration of generating a second kernel from a first kernel for one or more dilation rates, in accordance with some embodiments of the present disclosure;

**FIGURE 4B and FIGURE 4C** shows an exemplary illustration of storing an input image in the memory, in accordance with some embodiments of the present disclosure;

**FIGURE 4D** shows an exemplary determination of size of one or more disintegrated kernels based on dilation rate, in accordance with some embodiments of the present disclosure;

**FIGURE 4E** show exemplary generation of address for one or more blocks of the input image, in accordance with some embodiments of the present disclosure;

**FIGURE 4F** shows an exemplary illustration of determining one or more disintegrated kernels for a dilation rate of 8, in accordance with some embodiments of the present disclosure;

**FIGURE 4G** shows an exemplary illustration of determining one or more disintegrated kernels for a dilation rate of 12, in accordance with some embodiments of the present disclosure;

**FIGURE 4H** shows an exemplary illustration of determining an output image by convolving the one or more blocks of the input image with one or more disintegrated kernels, in accordance with some embodiments of the present disclosure;

**FIGURE 4I** shows an exemplary illustration of determining an output image by convolving the one or more disintegrated kernels with shards of the input image, in accordance with some embodiments of the present disclosure; and

**FIGURE 5** shows an exemplary computer system for performing convolution in a neural network with variable dilation rate, in accordance with some embodiments of the present disclosure.

It should be appreciated by those skilled in the art that any block diagrams herein represent conceptual views of illustrative systems embodying the principles of the present subject matter. Similarly, it may be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and may be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "includes" "comprising", "including" or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" or "includes... a" does not, without more constraints, preclude the existence of other elements or additional elements in the system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

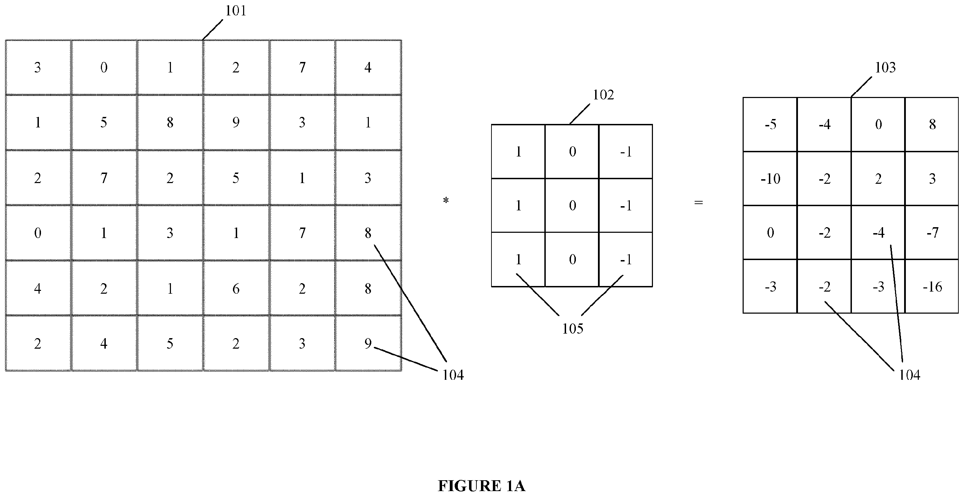

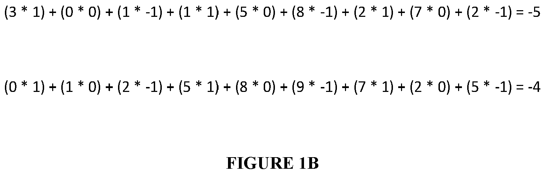

The present disclosure relates to a method of convolution in neural network with variable dilation rate. Convolution is an operation performed on an input image to extract features for performing one or more image processing tasks for example, object recognition, scene segmentation and the like. The convolution involves computing a dot product between the one or more kernel values with plurality of pixel values of the input image. Further, the dot product is computed across a width and a height of the input image. For example, consider the input image (101) with plurality of pixel values (104) and a first kernel (102) with one or more kernel values (105) as shown in **FIGURE 1A.** The input image (101) is represented as a matrix with 6 rows and 6 columns. The first kernel (102) is represented as the matrix with 3 rows and 3 columns. An output image (103) obtained as a result of convolving the input image (101) with the first kernel (102) with a stride of "1" is shown in **FIGURE 1A.** A value corresponding to the first row and first column (i.e. -5) and a value corresponding to the first row and second column (i.e. -4) in the output image (103) obtained by convolving the input image (101) with the first kernel (102) is as shown in **FIGURE 1B.** Further, the number of rows and the number of columns of the output image (103) is computed using the equations given below:

$$number\ of\ rows =$$

$$\frac{number\ of\ rows\ of\ the\ input\ image\ (101) - number\ of\ rows\ of\ the\ first\ kernel\ (102) + 1}{stride} \quad \dotso$$

$$(1)$$

$$number\ of\ columns\ =$$

$$\frac{number\ of\ columns\ of\ the\ input\ image\ (101) - number\ of\ columns\ of\ the\ first\ kernel\ (102) + 1}{stride} \quad \dotso (2)$$

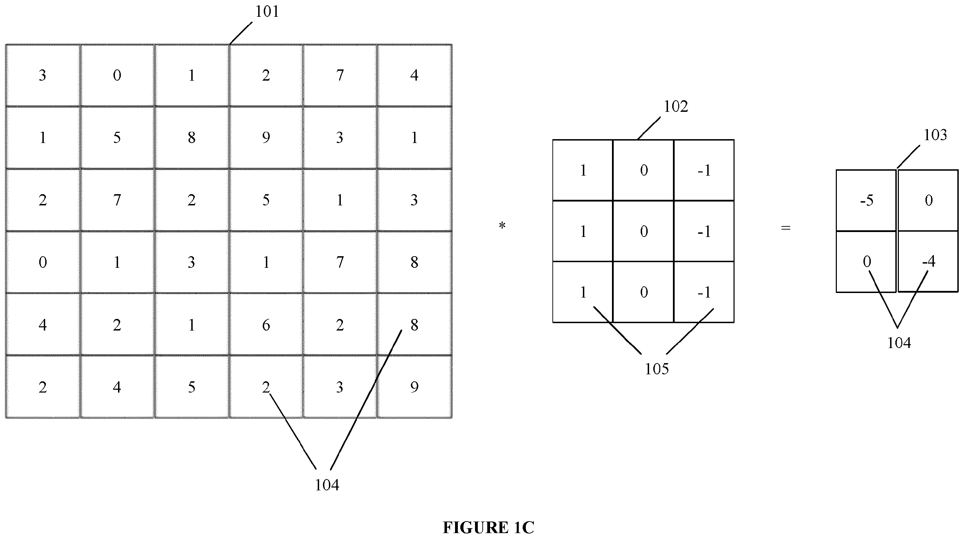

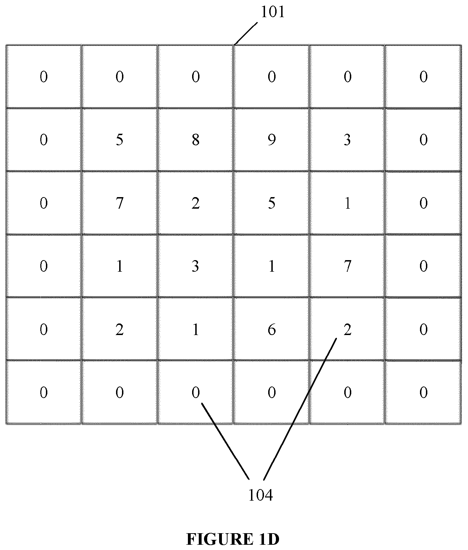

where the stride is indicative of number of pixels to be skipped for computing the dot product across the width and the height of the input image (101). For example, a stride of 2 indicates a shift by 2 rows or 2 columns while computing the dot product across the width and the height of the input image (101). An increase in value of the stride decreases the size of the output image (103) due to decrease in the number of dot products computed across the width and the height of the input image (101). For example, the result of convolving the input image (101) with the first kernel (102) with a stride of "2" is shown in **FIGURE 1C.** In an embodiment, the input image (101) may be padded with one or more rows of zeros and one or more columns of zero when the number of rows and the number of columns of the output image (103) should be equal to the number of rows and number of columns of the input image (101). For example, the input image (101) padded with two rows and two columns of zeros is as shown in **FIGURE 1D.**

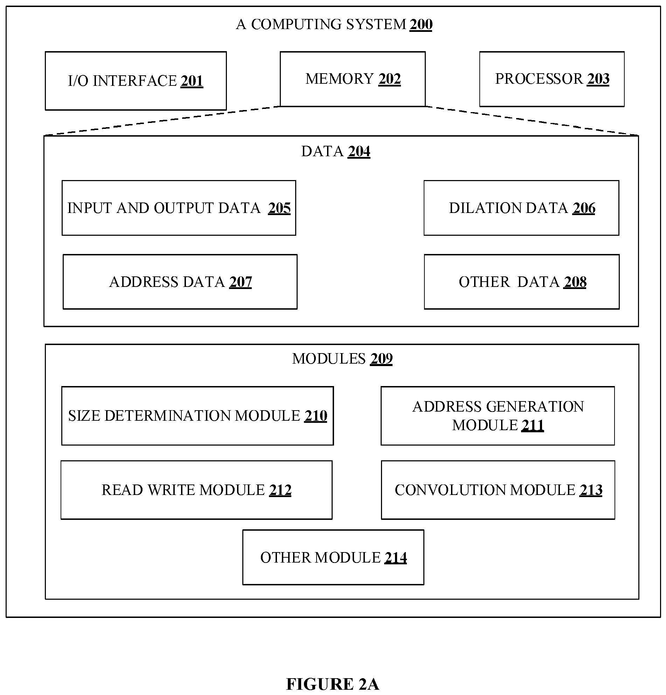

**FIGURE 2A** shows a detailed block diagram of a computing system (200), in accordance with some embodiments of the present disclosure.

The computing system (200) may include a Central Processing Unit ("CPU" or "processor") (203) and a memory (202) storing instructions executable by the processor (203). The processor (203) may include at least one data processor for executing program components for executing user or system-generated requests. The memory (202) may be communicatively coupled to the processor (203). The computing system (200) further includes an Input/ Output (I/O) interface (201). The I/O interface (201) may be coupled with the processor (203) through which an input signal or/and an output signal may be communicated. In one embodiment, the computing system (200) may receive the input image (102), the first kernel (102), and a dilation rate through the I/O interface (201).

In some implementations, the computing system (200) may include data (204) and modules (209) as shown in **FIGURE 2A**. As an example, the data (204) and modules (209) may be stored in the memory (202) configured in the computing system (200). In one embodiment, the data (204) may include, for example, an input and output data (205), a dilation data (206), an address data (207) and other data (208). In the illustrated **FIGURE 2A**, data (204) are described herein in detail.

In an embodiment, the input and output data (205) includes at least one of the plurality of pixel values (104) of the input image (101), one or more kernel values (105) associated with the first kernel (102), and the plurality of pixel values (104) of the output image (103). Further, the input and output data (205) includes at least one of a size of the input image (101), a size of the output image (103), and a size of the first kernel (102). The size is indicative of the number of rows and the number of columns present in the matrix of the input image (101), first kernel (102) and the output image (103). For example, the plurality of pixel values (104) of the input image (101) having a size of 6x6, the one or more kernel values (105) associated with the first kernel (102) having a size of 3x3, and the plurality of pixel values (104) of the output image (103) having a size of 4x4 is as shown in **FIGURE 1A.**

In an embodiment, the dilation data (206) includes at least one of a dilation rate, one or more kernel values (105) associated with the second kernel, size of the second kernel. The size is indicative of the number of rows and the number of columns present in the matrix of the second kernel. The dilation rate is indicative of the one or more zeros to be inserted between the one or more kernel values (105) of the first kernel (102) to generate the second kernel. The one or more zeros are inserted in the x-direction and in the y-direction of the first kernel (102). For example, a dilation rate of "3" indicates two zeros to be inserted between the one or more kernel values (105) in the x-direction and in the y-direction of the first kernel (102). The one or more zeros inserted between the one or more kernel values (105) is equal to one less than the dilation rate.

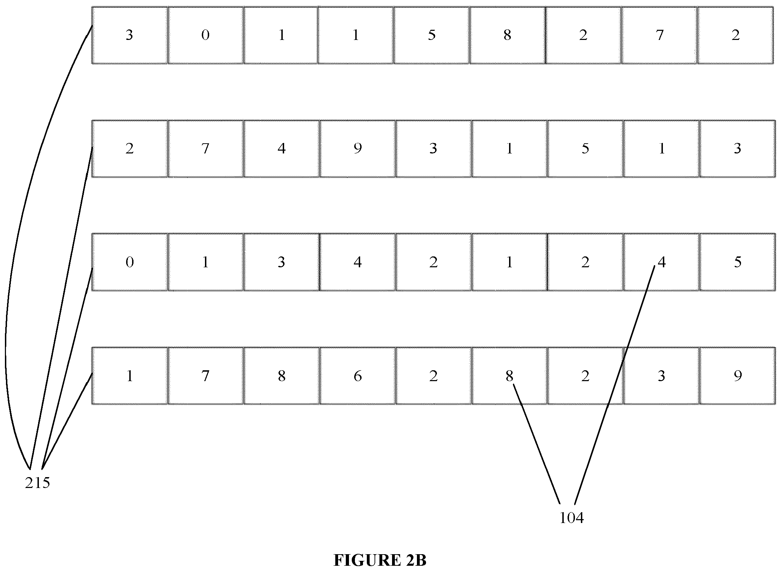

In an embodiment, the address data (207) includes at least one of an address of the one or more blocks of the input image (101), the address of the kernel values (105) associated with the first kernel (102), the address of the kernel values (105) associated with the second kernel. One or more pixel values (104) among the plurality of pixel values (104) of the input image (101) are grouped to form the one or more blocks. For example, the one or more pixel values (104) among the plurality of pixel values (104) in the input image (101) shown in **FIGURE 1A,** is grouped into one or more blocks (215) (i.e. 4 blocks (215)) of input image (101) as shown in **FIGURE 2B.** Further, the address of the one or more blocks (215) is represented using at least one of binary numbers, hexadecimal numbers and the like. For example, the address of a first block of the input image (101) in binary is represented as "0100110110" and the address of a first block of the input image (101) in hexadecimal is represented as "1D295F".

In an embodiment, the other data (208) may include at least one of a size of the baseline architecture of the memory (202), address of one or more disintegrated kernels, a maximum value associated with counters for example Cell Number X, Cell Number Y, Cell Number Z, Dilation Offset X, and Dilation Offset Y and the like.

In some embodiments, the data (204) may be stored in the memory (202) in form of various data structures. Additionally, the data (204) may be organized using data models, such as relational or hierarchical data models. The other data (208) may store data, including temporary data and temporary files, generated by the modules (209) for performing the various functions of the computing system (200). Further, in an embodiment, the memory (202) may include at least one of a Static Random-Access Memory (SRAM), Dynamic Random-Access Memory (DRAM), a global buffer and the like.

In some embodiments, the data (204) stored in the memory (202) may be processed by the modules (209) of the computing system (200). The modules (209) may be stored within the memory (202), communicatively coupled to the processor (203) and may be present outside the memory (202) as shown in **FIGURE 2A.** As used herein, the term modules (209) may refer to an Application Specific Integrated Circuit (ASIC), a Field Programmable Gate Array (FPGA), an electronic circuit, a processor (203) (shared, dedicated, or group) and the memory (202) that execute one or more software or firmware programs, a combinational logic circuit, and/or other suitable components that provide the described functionality. In some other embodiments, the modules (209) may be implemented using at least one of ASICs and FPGAs.

In one implementation, the modules (209) may include, for example, a size determination module (210), an address generation module (211), a read write module (212), a convolution module (213), and other module (214). It may be appreciated that such aforementioned modules (209) may be represented as a single module or a combination of different modules.

In an embodiment, the size determination module (210) is used to determine the size of one or more disintegrated kernels. The size of the one or more disintegrated kernels based on at least one of the size of the first kernel (102), a baseline architecture of the memory (202) associated with the computing system (200) and the dilation rate. The baseline architecture of the memory (202) may be indicative of a count of the plurality of the pixel values (104) stored in each of the one or more blocks (215) of the memory (202). The plurality of the pixel values (104) associated with a first block among the one or more blocks (215) may be read from the memory (202) in one read cycle. The plurality of the pixel values (104) is associated with one or more rows and one or more columns of the input image (101). For example, for the one or more blocks (215) shown in **FIGURE 2B,** the baseline architecture is 3x3. A read operation associated with first block of the **FIGURE 2B,** retrieves a group of 9-pixel values (104) associated with first three rows and first three columns of the input image (101) shown in **FIGURE 1A.** In another example, for a baseline architecture of 8x4, with the size of the first kernel (102) as 3x3 and the dilation rate of 6, the size of the one or more disintegrated kernels is 3x7.

In an embodiment, the address generation module (211) is used to generate the address of one or more blocks (215) of an input image (101). The address of the one or more blocks (215) is determined using one or more parameters comprising at least one of Base Address of a first block among the one or more blocks (215) in the memory (202), Column Stride, Cell Number X, Row Stride, Cell Number Y , Channel Stride, Cell Number Z, Dilation Column Stride, Dilation Offset X, Dilation Row Stride, Dilation Offset Y, wherein X is indicative of number of blocks (215) in a horizontal direction of the input image (101), Y is indicative of number of blocks (215) in a vertical direction of the input image (101), Z is indicative of number of blocks (215) per channel in the input image (101). The address of the one or more blocks (215) is generated using the equations given below:

$$Row\ Stride = \frac{number\ of\ columns\ in\ the\ input\ image\ (101) + (number\ of\ columns\ in\ the\ baseline\ architecture\ of\ the\ memory\ (202) - 1)}{number\ of\ columns\ in\ the\ baseline\ architecture\ of\ the\ memory\ (202)}$$

...................................................................................................................... (3)

$$Column\ Stride\ =\ 1 \quad \dots\dots\dots\dots\dots\dots\dots\dots\dots\dots\dots\dots\dots\dots\dots\dots\ (4)$$

$$Channel\ Stride = Row\ Stride *$$

$$\frac{number\ of\ rows\ in\ the\ input\ image\ (101)* (number\ of\ rows\ in\ the\ baseline\ architecture\ of\ the\ memory\ (202)-1)}{number\ of\ rows\ in\ the\ baseline\ architecture\ of\ the\ memory\ (202)} \quad \dots\dots\dots\dots\dots\dots\dots\ (5)$$

$$Dilation\ Column\ Stride\ =\ Column\ Stride *$$

$$\left(\frac{dilation\ rate}{number\ of\ columns\ in\ the\ baseline\ architecture\ of\ the\ memory\ (202)}\right) \quad \dots\dots\dots\dots\dots\dots\dots\dots\dots\dots\ (6)$$

$$Dilation\ Row\ Stride\ =\ Row\ Stride *$$

$$\left(\frac{dilation\ rate}{number\ of\ rows\ in\ the\ baseline\ architecture\ of\ the\ memory\ (202)}\right) \quad .$$

$$(7)$$

$$address\ of\ the\ one\ or\ more\ blocks\ =\ Base\ Address\ +\ Column\ Stride *$$
$$Cell\ Number\ X\ +\ Row\ Stride * Cell\ Number\ Y\ +\ Channel\ Stride * Cell\ Number\ Z\ +$$
$$Column\ Stride * Dilation\ Column\ Stride * Dilation\ Offset\ X\ +\ Dilation\ Row\ Stride *$$
$$DilationOffset\_Y \quad \dots\dots\dots\dots\dots\dots\dots\dots\dots\dots\dots\dots\dots\dots\dots\dots\dots\dots\dots$$

$$(8)$$

where Base Address is indicative of an address of a pixel value in first row and first column of the input image (101), the Cell Number X, Cell Number Y, Cell Number Z, Dilation Offset X, and Dilation Offset Y are counters.

In an embodiment, the read write module (212) is used to fetch the one or more blocks (215) of the input image (101) from the memory (202) based on the address of the one or more blocks (215) generated by the address generation module (211). The one or more blocks (215) of the input image (101) fetched by the read write module (212) includes fetching a plurality of pixel values (104) of the input image (101) corresponding to each block of the one or more blocks (215) of the input image (101). Further, the read write module (212) is used to fetch the one or more disintegrated kernels from the memory (202). Furthermore, the read write module (212) is used to write one or more pixel values (104) of the output image (103) to the memory (202).

In an embodiment, the convolution module (213) is used to perform the convolution operation between the one or more blocks (215) of the input image (101) and each of the one or more disintegrated kernels to determine the output image (103). The convolution module (213) is used for determining the output image (103), by generating one or more matrices by multiplying one or more kernel values (105) of each of the one or more disintegrated kernels with a plurality of pixel values (104) corresponding to each block of the one or more blocks (215) of the input image (101). Further, the output image (103) is determined by adding the one or more matrices.

In an embodiment, the other module (214) is used to determine a second kernel based on the first kernel (102) and the dilation rate, determine the address of the one or more disintegrated kernels, determine at least one of a column stride, row stride, channel stride, determine values associated with Cell Number X, Cell Number Y, Cell Number Z, Dilation Offset X, Dilation Offset Y and the like.

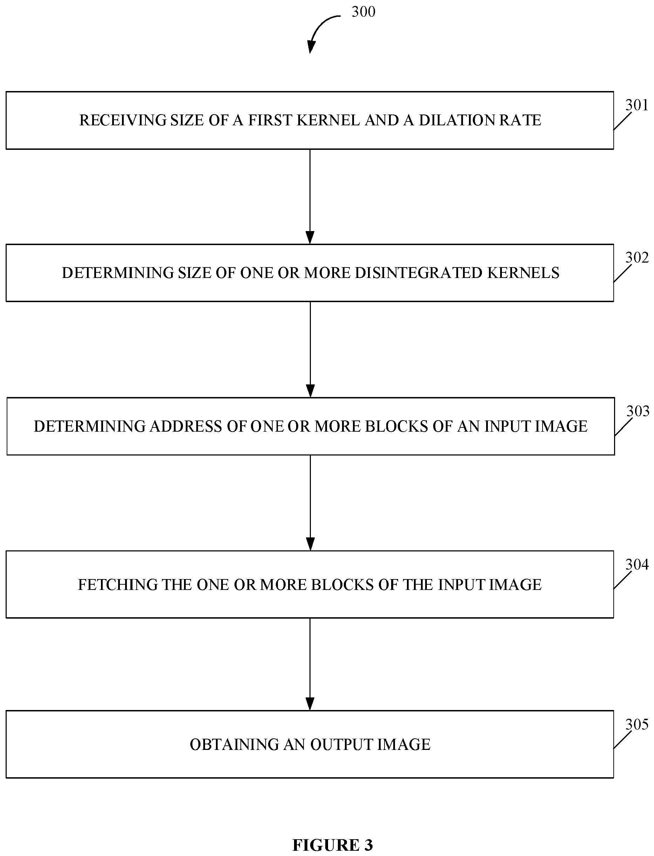

**FIGURE** 3 shows a flowchart illustrating method of convolution in a neural network with variable dilation rate, in accordance with some embodiment of the present disclosure.

The order in which the method 300 may be described is not intended to be construed as a limitation, and any number of the described method blocks (215) may be combined in any order to implement the method. Additionally, individual blocks (215) may be deleted from the methods without departing from the scope of the subject matter described herein. Furthermore, the method may be implemented in any suitable hardware, software, firmware, or combination thereof.

At operation 301, the computing system (200), receives the size of the first kernel (102), and the dilation rate.

For example, the size of the first kernel (102) is "3x3" and the dilation rate is "8".

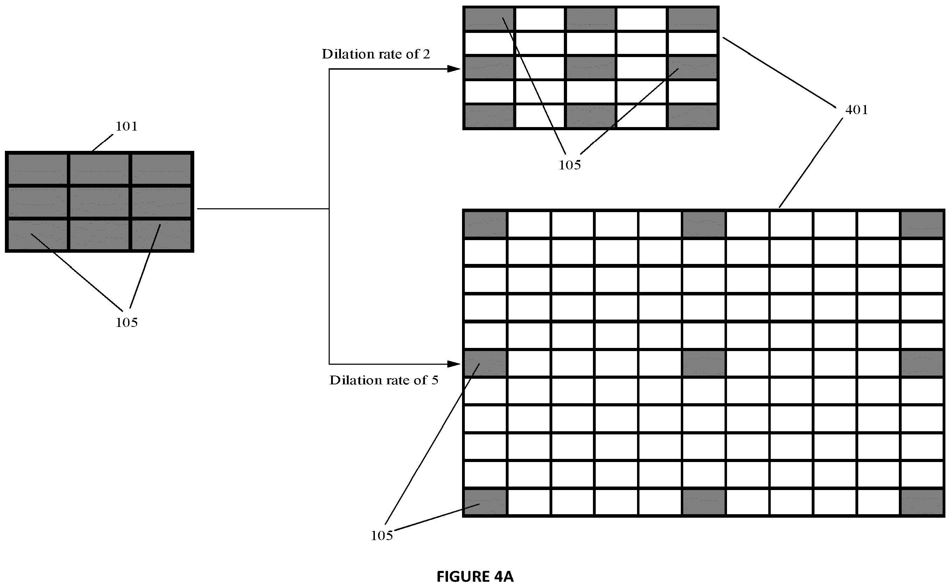

In an embodiment, the first kernel (102) is indicative of an un-dilated kernel. The un-dilated kernel includes one or more rows and one or more columns of one or more kernel values (105). The size of the first kernel (102) may be 2x2, 3x3, 4x4, and the like. Further, the dilation rate is indicative of the one or more zeros to be inserted between the one or more kernel values (105) of the first kernel (102) to generate the second kernel. The one or more zeros are inserted in the x-direction and in the y-direction of the first kernel (102). The one or more zeros inserted between the one or more kernel values (105) is equal to one less than the dilation rate. For example, consider the first kernel (102) having a size of 3x3 and the one or more kernel values (105) of the first kernel (102) is indicated by a "grey shading" as shown in the **FIGURE 4A**. The first kernel (102) is dilated with the dilation rate of "2" to generate the second kernel (401) having the size 5x5 as shown in **FIGURE 4A**. The inserted one or more zeros is indicated by "white shading / noo shading" as shown in **FIGURE 4A**. In another example, the first kernel (102) is dilated with the dilation rate of "5" to generate the second kernel (401) having the size $11 \times 11$ as shown in **FIGURE 4A**. The "grey shading" in the second kernel (401) indicates the one or more kernel values (105) of the first kernel (102) and "white shading" indicates the one or more zeros inserted between the one or more kernel values (105).

Referring back to **FIGURE 3**, at the operation 302, the computing system (200), determines at least one of the size of one or more disintegrated kernels based on at least one of the size of the first kernel (102), the baseline architecture of the memory (202) associated with the computing system (200) and the dilation rate.

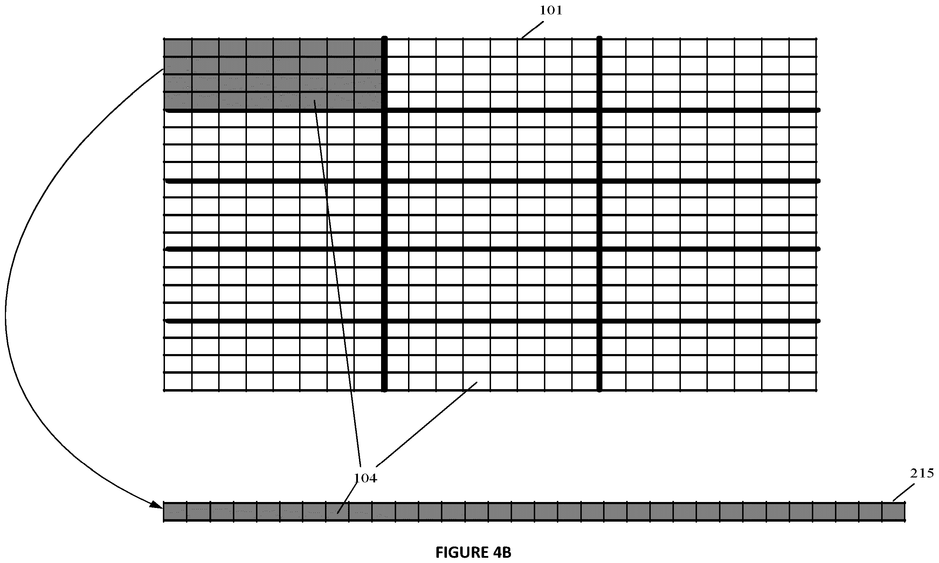

In an embodiment, the baseline architecture of the memory (202) is indicative of the count of the plurality of the pixel values (104) read from the memory (202) in one read cycle. Further, the size of the one or more blocks (215) of the input image (101) stored in the memory (202) is based on the baseline architecture of the memory (202). For example, if the baseline architecture is 4x8, then for every read cycle, 32-pixel values (104) are read from the memory (202). The 32-pixel values (104) are stored in one row or one column in the memory (202). Further, the 32-pixel values (104) corresponds to the plurality of pixel values (104) in the input image (101). The 32-pixel values (104) in the input image (101) corresponds to 4 rows and 8 columns. For example, the input image (101) with the size 20x24 is as shown in **FIGURE 4B**, the plurality of the pixel values (104) are grouped into 15 blocks (215) of size 4x8, where each block includes 32 pixel values (104) as shown in **FIGURE 4B**. The 32-pixel values (104) corresponding to each block is stored in one row of the memory (202) as shown in **FIGURE 4B**. The computing system (200) reads 32-pixel values (104) stored in one row of the memory (202) in one read cycle.

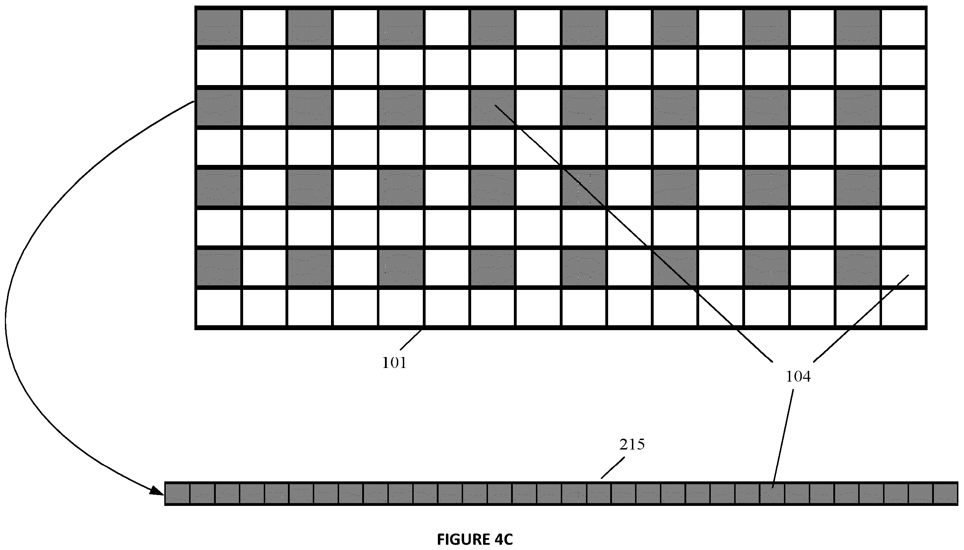

In an embodiment, the one or more blocks (215) of the input image (101) stored in the memory (202) is based on at least one of a baseline architecture of the memory (202) and the dilation rate. For example, consider the baseline architecture of the memory (202) as 4x8 and the dilation rate of 6. The plurality of pixel values (104) in the input image (101) is divided into shards as shown in **FIGURE 4C**. Each shard containing 32-pixel values (104) is stored as one row or one column in the memory (202) as shown in **FIGURE 4C**.

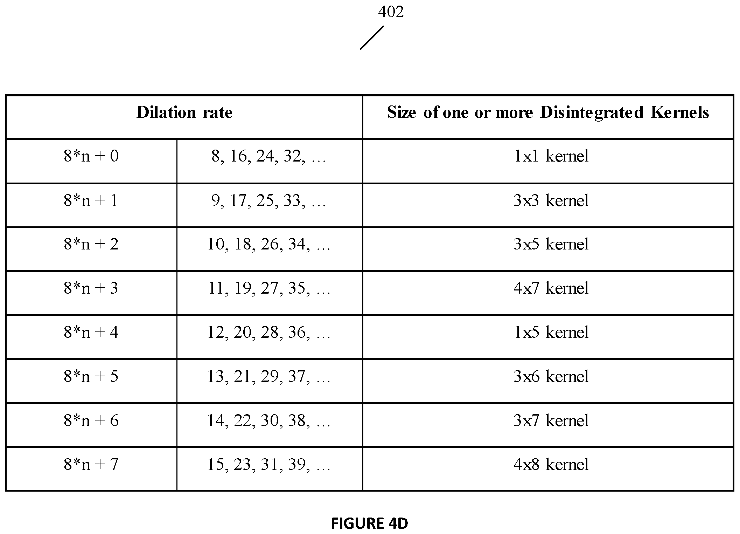

In an embodiment, for the baseline architecture of 4x8, the size of the one or more disintegrated kernels corresponding to the second kernel (401) with a variable dilation rate is shown in table (402) of **FIGURE 4D**. The "n" as indicated in table (402) of **FIGURE 4D** is a natural number. The value of "n" is selected to obtain the received dilation rate. Based on the value of "n" and the dilation rate, the corresponding size of the one or more disintegrated kernels is determined from the table (402) as shown in the **FIGURE 4D**. For example, if the dilation rate is 14, the value of "n" is selected as "1" and the size of the one or more disintegrated kernels is 3x7. In another example, for dilation rates of 10, 18, 26, 34 and the like, the size of the one or more disintegrated kernels is 3x5. The person skilled in the art may appreciate determination of the table (402) as shown in **FIGURE 4D** for one or more baseline architecture of the memory (202) and one or more dilation rate.

Referring back to **FIGURE 3**, at the operation 303, the computing system (200), determines the address of the one or more blocks (215) of the input image (105) corresponding to each of the one or more disintegrated kernels based on the dilation rate, and the one or more parameters associated with a size of the input image (101) and the memory (202).

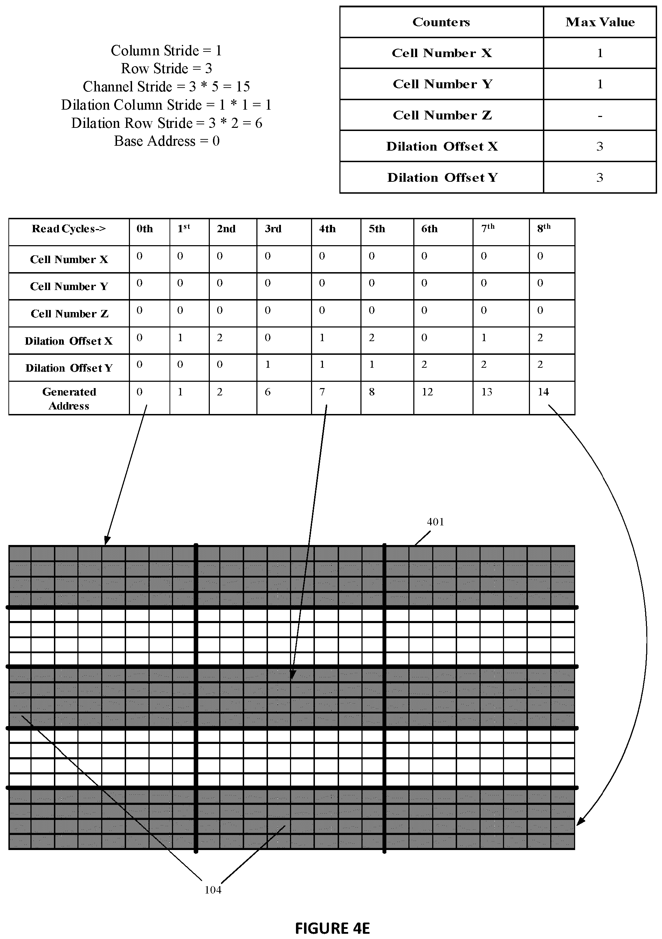

In an embodiment, the address of one or more blocks (215) is determined using the one or more parameters comprising at least one of Base Address of a first block among the one or more blocks (215) in the memory (202), Column Stride, Cell Number X, Row Stride, Cell Number Y, Channel Stride, Cell Number Z, Dilation Column Stride, Dilation Offset X, Dilation Row Stride, Dilation Offset Y, wherein X is indicative of number of blocks (215) in a horizontal direction of the image, Y is indicative of number of blocks (215) in a vertical direction of the image, Z is indicative of number of blocks (215) per channel in the image. The address of the one or more blocks (215) is generated using the equations 3 to 8. In an embodiment, the maximum value of the counters may be predetermined based on the dilation rate. For example, consider the baseline architecture of the memory (202) as 4x8, dilation rate of 8, size of the input image (101) as 20x24. The address of the one or more blocks (215) of the input image (101) is determined as shown in **FIGURE 4E**. The address determined for the one or more blocks (215) is indicated by "grey shading" in the **FIGURE 4E**. The one or more blocks (215) of the input image (101) with "no shading" will be multiplied with the one or more zeros inserted in the second kernel (401) and do not contribute for the determination of the output image (103). Therefore, the address is not determined for the one or more blocks (215) with "no shading" because the one or more blocks (215) with "no shading" are not required for determining the output image (103).

Referring back to **FIGURE 3,** at the operation 304, the computing system (200), fetches the one or more blocks (215) of the input image (101) based on the address and the one or more disintegrated kernels from the memory (202).

In an embodiment, fetching the one or more blocks (215) of the input image (101) includes fetching the plurality of the pixel values (104) of the input image (101) corresponding to each block of the one or more blocks (215) of the input image (101). The address of the one or more blocks (215) of the input image (101) is provided to the memory (202) for fetching the plurality of pixel values (104). The computing system (200) fetches a subset of the one or more blocks (215) of the input image (101) involved in determining the output image (103) based on the convolution.

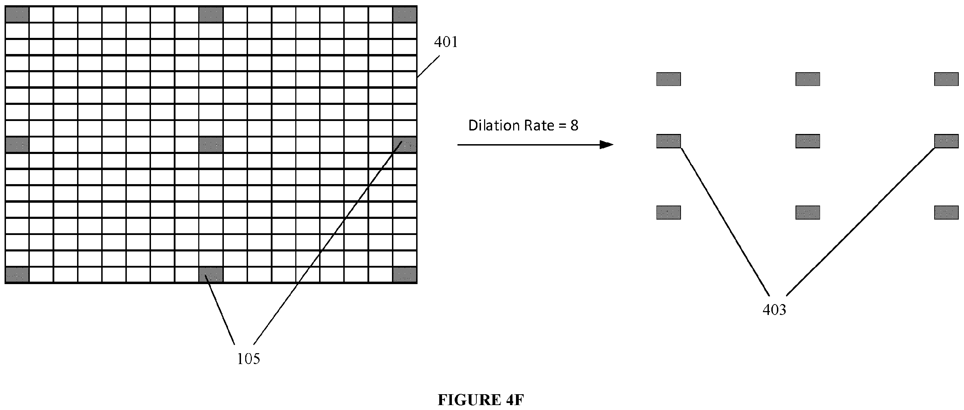

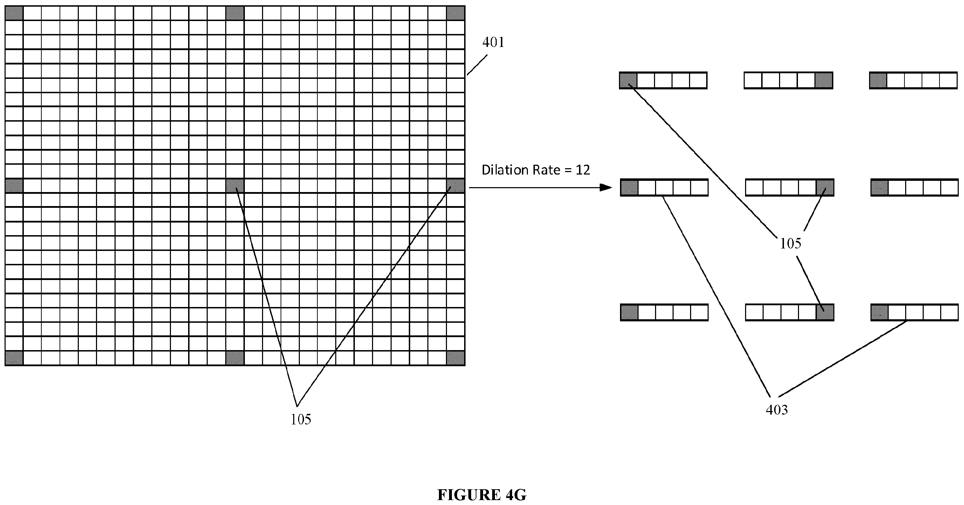

In an embodiment, fetching the one or more disintegrated kernels from the memory (202) includes identifying one or more kernel values (105) corresponding to the one or more disintegrated kernels in the second kernel (401), where the second kernel (401) is generated based on the first kernel (102) and the dilation rate and fetching the one or more kernel values (105) corresponding to the one or more disintegrated kernels based on the size of the one or more disintegrated kernels. For example, consider the second kernel (401) having a size of 17x17 generated from the first kernel (102) having a size 3x3 for the dilation rate of 8. The one or more kernel values (105) corresponding to the one or more disintegrated kernels (403) having the size 1x1 is identified as shown in **FIGURE 4F**. In another example, the one or more kernel values (105) corresponding to the one or more disintegrated kernels (403) having a size 1x5 corresponding to the second kernel (401) having a size 25x25 is as shown in **FIGURE 4G**. Further, the address of the one or more disintegrated kernels (403) is provided to the memory (202) for fetching the one or more kernel values (105) associated with each of the one or more disintegrated kernels (403).

Referring back to **FIGURE 3**, at the operation 305, the computing system (200), obtains the output image (103) based on convolution of each of the one or more disintegrated kernels (403) and the one or more blocks (215) of the input image (101).

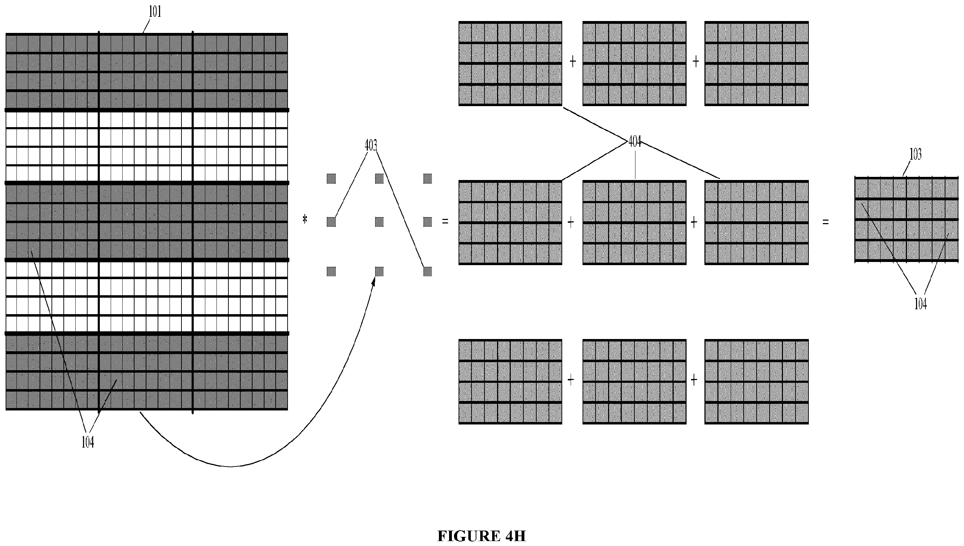

In an embodiment, determining the output image (103) includes generating the one or more matrices by multiplying one or more kernel values (105) of each of the one or more disintegrated kernels (403) with a plurality of pixel values (104) corresponding to each block of the one or more blocks (215) of the input image (101) and adding the one or more matrices to determine the output image (103). For example, consider an input image (101) with a size of 20x24 and one or more disintegrated kernels (403) of size 1x1 as shown in **FIGURE 4H**. The one or more blocks (215) of the input image (101) is multiplied with the corresponding one or more disintegrated kernels (403) to generate the one or more matrices as shown in **FIGURE 4H**. The one or more matrices are added to determine the output image (103) as shown in **FIGURE 4H.**

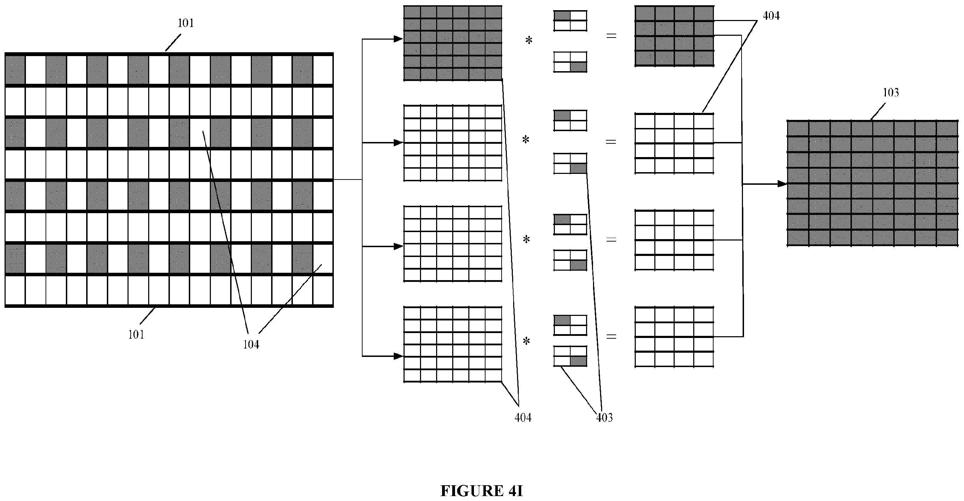

In an embodiment, when the input image (101) is divided into shards (404) based on the dilation rate and stored in the memory (202) as shown in **FIGURE 4I**. When the input image (101) is divided into shards (404), the dilation rate is reduced based on the number of shards (404) generated. For example, if the input image (101) is divided into 4 shards then the dilation rate of 6 is reduced to 3. For each shard (404) the convolution with each of the one or more disintegrated kernels (403) is performed to generate one or more matrices as shown in **FIGURE 4I.** Further, the one or more matrices (404) are treated as shards and are combined to generate the output image (103) as shown in **FIGURE 4I**.

In an embodiment, the method of convolution in a neural network with variable dilation rate divides the second kernel (401) into one or more disintegrated kernels (403) and convolves each of the disintegrated kernels (403) with the one or more blocks (215) of the input image (101). The one or more blocks (215) in turn plurality of pixel values (104) of the input image (101) to be fetched from the memory (202) is reduced because the one or more blocks (215) convolving with zeros in the second kernel (401) is not fetched from the memory. The number of read cycles required to fetch the one or more blocks (215) from the memory is reduced. Further, fetching the one or more disintegrated kernels (403) includes a partial one or more kernel values (105) from the second kernel (401), therefore the read cycles and the count of one or more kernel values (105) fetched from the memory (202) is reduced. Further, the count of multiplications and additions performed during convolution is reduced because of the fewer pixel values (104) and fewer kernel values (105) fetched from the memory. Finally, the determination of the output image (103) is faster due to reduced multiplications and additions.

COMPUTER SYSTEM

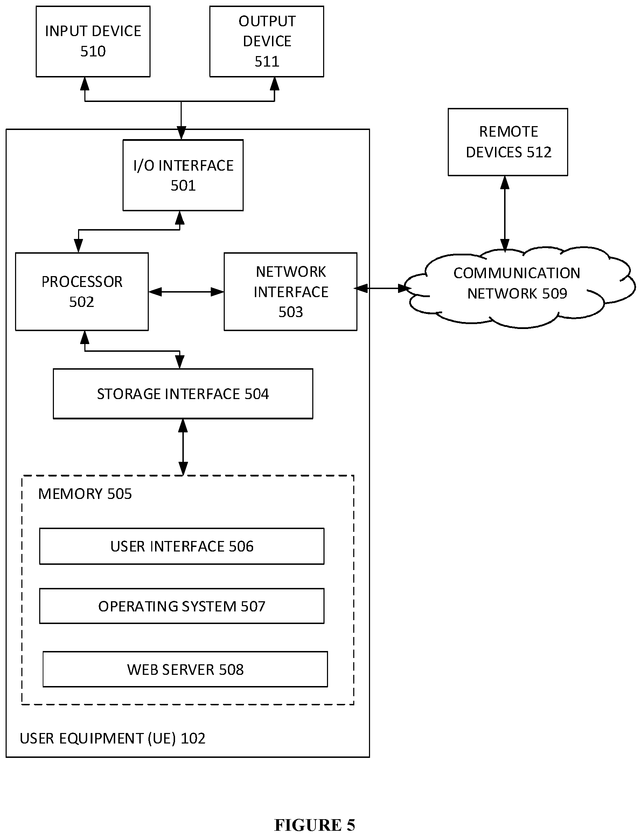

**FIGURE 5** illustrates a block diagram of an exemplary computer system (500) for implementing embodiments consistent with the present disclosure. In an embodiment, the computer system (500) may be used to implement the method for performing convolution in the neural network with variable dilation rate. The computer system (500) may comprise a central processing unit ("CPU" or "processor") (502). The processor (502) may comprise at least one data processor for executing program components for performing convolution in the neural network with variable dilation rate. The processor (502) may include specialized processing units such as integrated system (bus) controllers, memory management control units, floating point units, graphics processing units, digital signal processing units, etc.

The processor (502) may be disposed in communication with one or more input/output (I/O) devices (not shown) via I/O interface (501). The I/O interface (501) may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface (501), the computer system (500) may communicate with one or more I/O devices. For example, the input device (510) may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device (511) may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system (500) is connected to the service operator through a communication network (509). The processor (502) may be disposed in communication with the communication network (509) via a network interface (503). The network interface (503) may communicate with the communication network (509). The network interface (503) may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network (509) may include, without limitation, a direct interconnection, e-commerce network, a peer to peer (P2P) network, local area network (LAN), wide area network (WAN), wireless network (e.g., using Wireless Application Protocol), the Internet, Wi-Fi, etc. Using the network interface (503) and the communication network (509), the computer system (500) may communicate with the one or more service operators.

In some embodiments, the processor (502) may be disposed in communication with a memory (505) (e.g., RAM, ROM, etc. not shown in Figure 5 via a storage interface (504). The storage interface (504) may connect to memory (505) including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory (505) may store a collection of program or database components, including, without limitation, user interface (506), an operating system (507), web server (508) etc. In some embodiments, computer system (500) may store user/application data (506), such as the data, variables, records, etc. as described in this disclosure. Such databases may be implemented as fault-tolerant, relational, scalable, secure databases such as Oracle or Sybase.

The operating system (507) may facilitate resource management and operation of the computer system (500). Examples of operating systems include, without limitation, APPLE® MACINTOSH® OS X®, UNIX®, UNIX-like system distributions (E.G., BERKELEY SOFTWARE DISTRIBUTION® (BSD), FREEBSD®, NETBSD®, OPENBSD, etc.), LINUX® DISTRIBUTIONS (E.G., RED HAT®, UBUNTU®, KUBUNTU®, etc.), IBM®OS/2®, MICROSOFT® WINDOWS® (XP®, VISTA®/7/8, 10 etc.), APPLE® IOS®, GOOGLE™ ANDROID™, BLACKBERRY® OS, or the like.

In some embodiments, the computer system (500) may implement a web browser stored program component. The web browser may be a hypertext viewing application, such as MICROSOFT® INTERNET EXPLORER®, GOOGLE™ CHROME™, MOZILLA® FIREFOX®, APPLE® SAFARI®, etc. Secure web browsing may be provided using Secure Hypertext Transport Protocol (HTTPS), Secure Sockets Layer (SSL), Transport Layer Security (TLS), etc. Web browsers may utilize facilities such as AJAX, HTML, ADOBE® FLASH®, JAVASCRIPT®, JAVA®, Application Programming Interfaces (APIs), etc. In some embodiments, the computer system (500) may implement a mail server (not shown in figure) stored program component. The mail server may be an Internet mail server such as Microsoft Exchange, or the like. The mail server may utilize facilities such as Active Server Pages (ASP), ACTIVEX®, ANSI® C++/C#, MICROSOFT®, .NET, CGI SCRIPTS, JAVA®, JAVASCRIPT®, PERL®, PHP, PYTHON®, WEBOBJECTS®, etc. The mail server may utilize communication protocols such as Internet Message Access Protocol (IMAP), Messaging Application Programming Interface (MAPI), MICROSOFT® Exchange, Post Office Protocol (POP), Simple Mail Transfer Protocol (SMTP), or the like. In some embodiments, the computer system (500) may implement a mail client stored program component (not shown in figure). The mail client may be a mail viewing application, such as APPLE® MAIL, MICROSOFT® ENTOURAGE®, MICROSOFT® OUTLOOK®, MOZILLA® THUNDERBIRD®, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processors to perform steps or stages consistent with the embodiments described herein. The term "computer-readable medium" should be understood to include tangible items and exclude carrier waves and transient signals, i.e., non-transitory. Examples include Random Access memory (RAM), Read-Only memory (ROM), volatile memory, non-volatile memory, hard drives, Compact Disc (CD) ROMs, Digital Video Disc (DVDs), flash drives, disks, and any other known physical storage media.

The input image (101), the dilation rate and the baseline architecture of the memory (202) may be received from the remote devices (512).

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it may be readily apparent that more than one device/article (whether or not they cooperate) may be used in place of a single device/article. Similarly, where more than one device or article is described herein (whether or not they cooperate), it may be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **FIGURE** 3 shows certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments may be apparent to those skilled in the art. The various aspects and embodiments disclosed herein are for purposes of illustration and are not intended to be limiting, with the true scope being indicated by the following claims.

**REFERRAL NUMERALS:**

| Reference number | Description |
| --- | --- |
| 101 | Input image |
| 102 | First kernel |
| 103 | output image |
| 104 | Pixel values |
| 105 | Kernel values |
| 200 | Computing system |
| 201 | I/O Interface |
| 202 | Memory |
| 203 | Processor |
| 204 | Data |
| 205 | Input and output data |
| 206 | Dilation data |
| 207 | Address data |

(continued)

| Reference number | Description |
| --- | --- |
| 208 | Other data |
| 209 | Modules |
| 210 | Size determination module |
| 211 | Address generation module |
| 212 | Read write module |
| 213 | Convolution module |
| 214 | Other module |
| 215 | Blocks |
| 401 | Second kernel |
| 402 | Table |
| 403 | Disintegrated kernels |
| 404 | Shards |
| 500 | Computer System |
| 501 | I/O interface |
| 502 | Processor |
| 503 | Network Interface |
| 504 | Storage Interface |
| 505 | Memory |
| 506 | User Interface |
| 507 | Operating System |
| 508 | Web Server |
| 509 | Communication Network |
| 510 | Input Device |
| 511 | Output Device |
| 512 | Remote Devices |

**Claims**

1. A method of convolution in a neural network with variable dilation rate, the method comprises:

   receiving (301), by a computing system (200), size of a first kernel (102), and a dilation rate;
   determining, by the computing system (200), a second kernel (401) based on the first kernel (102) and the dilation rate;
   dividing, by the computing system (200), the second kernel (401) into one or more disintegrated kernels (403);
   determining (302), by the computing system (200), a size of the one or more disintegrated kernels (403) based on at least one of the size of the first kernel (102), a baseline architecture of a memory (202) associated with the computing system (200) and the dilation rate;
   determining (303), by the computing system (200), address of one or more blocks (215) of an input image (101) corresponding to each of the one or more disintegrated kernels (403) based on the dilation rate, and one or more parameters associated with a size of the input image (101) and the memory (202);
   fetching (304), by the computing system (200), the one or more blocks (215) of the input image (101) based on the address and the one or more disintegrated kernels (403) from the memory (202); and
   obtaining (305), by the computing system (200), an output image (103) based on convolution of each of the one or more disintegrated kernels (403) and the one or more blocks (215) of the input image (101).

2. The method as claimed in claim 1, wherein the address of one or more blocks (215) is determined (303) using the one or more parameters comprising at least one of Base Address of a first block among the one or more blocks (215) in the memory (202), Column Stride, Cell Number X, Row Stride, Cell Number Y , Channel Stride, Cell Number Z, Dilation Column Stride, Dilation Offset X, Dilation Row Stride, Dilation Offset Y, wherein X is indicative of number of blocks in a horizontal direction of the image, Y is indicative of number of blocks in a vertical direction of the image, Z is indicative of number of blocks per channel in the image.

3. The method as claimed in claim 1 or 2, wherein size of the one or more blocks (215) of the input image (101) stored in the memory (202) is based on the baseline architecture of the memory (202).

4. The method as claimed in one of claims 1 to 3, wherein the one or more blocks (215) of the input image (101) stored in the memory (202) is based on at least one of a baseline architecture of the memory (202) and a dilation rate.

5. The method as claimed in one of claims 1 to 4, wherein fetching (304) the one or more blocks (215) of the input image (101) comprises fetching a plurality of pixel values (104) of the input image (101) corresponding to each block of the one or more blocks (215) of the input image (101).

6. The method as claimed in one of claims 1 to 5, wherein fetching the one or more disintegrated kernels (403) from the memory (202) comprises:

   identifying one or more kernel values (105) corresponding to the one or more disintegrated kernels (403) in the second kernel (401); and
   fetching the one or more kernel values (105) corresponding to the one or more disintegrated kernels (403) based on the size of the one or more disintegrated kernels (403).

7. The method as claimed in one of claims 1 to 6, wherein obtaining (305) the output image (101) comprises:

   generating a one or more matrices (404) by multiplying one or more kernel values (105) of each of the one or more disintegrated kernels (403) with a plurality of pixel values (104) corresponding to each block of the one or more blocks (215) of the input image (101); and
   adding the one or more matrices (404) to determine the output image (103).

8. A computer-readable storage medium storing instructions that, when executed by a processor (203) of a computing system (200), cause the processor (203) to perform the method of one of claims 1 to 7.

9. A computing system (200), for performing convolution in a neural network with variable dilation rate, the computing system (200) comprises:

   a processor (203); and
   a memory (202) communicatively coupled to the processor (203), wherein the memory (202) stores the processor instructions, which, on execution, causes the processor (203) to:

      receive (301) size of a first kernel (102), and a dilation rate;
      determine a second kernel (401) based on the first kernel (102) and the dilation rate;
      divide the second kernel (401) into one or more disintegrated kernels (403);
      determine (302) a size of the one or more disintegrated kernels (403) based on at least one of the size of the first kernel (102), a baseline architecture of the memory (202) associated and the dilation rate;
      determine (303) address of one or more blocks (215) of an input image (101) corresponding to each of the one or more disintegrated kernels (403) based on the dilation rate, and one or more parameters associated with a size of the input image (101) and the memory (202);
      fetch (304) the one or more blocks (215) of the input image (101) based on the address and the one or more disintegrated kernels (403) from the memory (202); and
      obtain (305) an output image (103) based on convolution of each of the one or more disintegrated kernels (403) and the one or more blocks (215) of the input image (101).

10. The computing system (200) as claimed in claim 9, wherein the processor (203) is configured to determine (303) the address of one or more blocks (215) using the one or more parameters comprising at least one of Base Address of a first block among the one or more blocks (215) in the memory (202), Column Stride, Cell Number X, Row Stride, Cell Number Y , Channel Stride, Cell Number Z, Dilation Column Stride, Dilation Offset X, Dilation Row Stride, Dilation Offset Y, wherein X is indicative of number of blocks in a horizontal direction of the image, Y is indicative of number of blocks in a vertical direction of the image, Z is indicative of number of blocks per channel in the image.

11. The computing system (200) as claimed in claim 9 or 10, wherein the processor (203) is configured to determine the size of the one or more blocks (215) of the input image (101) stored in the memory (202) based on the baseline architecture of the memory (202).

12. The computing system (200) as claimed in one of claims 9 to 11, wherein the processor (203) is configured to store the one or more blocks (215) of the input image (101) in the memory (202) based on at least one of a baseline architecture of the memory (202) and a dilation rate.

13. The computing system (200) as claimed in one of claims 9 to 12, wherein the processor (203) is configured to fetch (304) the one or more blocks (215) of the input image (101) by performing steps comprising fetching a plurality of pixel values of the input image (101) corresponding to each block of the one or more blocks (215) of the input image (101).

14. The computing system (200) as claimed in one of claims 9 to 13, wherein the processor (203) is configured to fetch the one or more disintegrated kernels (403) from the memory (202) by performing steps comprising:

identifying one or more kernel values (105) corresponding to the one or more disintegrated kernels (403) in the second kernel (401); and
fetching the one or more kernel values (105) corresponding to the one or more disintegrated kernels (403) based on the size of the one or more disintegrated kernels (403).

15. The computing system (200) as claimed in one of claims 9 to 14, wherein the processor (203) is configured to obtain (305) the output image (103) by performing steps comprising:

generating a one or more matrices (404) by multiplying one or more kernel values (105) of each of the one or more disintegrated kernels (403) with a plurality of pixel values (104) corresponding to each block of the one or more blocks (215) of the input image (101); and
adding the one or more matrices (404) to determine the output image (103).

**Patentansprüche**

1. Verfahren zur Faltung in einem neuronalen Netzwerk mit variabler Streckungsrate, wobei das Verfahren umfasst:

Empfangen (301), durch ein Rechensystem (200), einer Größe eines ersten Kerns (102) und einer Streckungsrate;
Ermitteln, durch das Rechensystem (200), eines zweiten Kerns (401) auf der Grundlage des ersten Kerns (102) und der Streckungsrate;
Unterteilen des zweiten Kerns (401) in einen oder mehrere zerteilte Kerne (403) durch das Rechensystem (200);
Ermitteln (302), durch das Rechensystem (200), einer Größe des einen oder der mehreren zerteilten Kerne (403) auf der Grundlage der Größe des ersten Kerns (102), und/oder einer Basisarchitektur eines Speichers (202), der mit dem Rechensystem (200) verbunden ist, und/oder der Streckungsrate;
Ermitteln (303), durch das Rechensystem (200), einer Adresse eines oder mehrerer Blöcke (215) eines Eingangsbildes (101) entsprechend zu jedem des einen oder der mehreren zerteilten Kerne (403) auf der Grundlage der Streckungsrate, und eines oder mehrerer Parameter, die mit einer Größe des Eingangsbildes (101) und dem Speicher (202) assoziiert sind;
Abrufen (304), durch das Rechensystem (200), des einen oder der mehreren Blöcke (215) des Eingangsbildes (101) auf der Grundlage der Adresse und des einen oder der mehreren zerteilten Kerne (503) aus dem Speicher (202); und
Erhalten (305) eines Ausgangsbildes (103) durch das Rechensystem (200) auf der Grundlage einer Faltung jedes des einen oder der mehreren zerteilten Kerne (403) und des einen oder der mehreren Blöcke (215) des Eingangsbildes (101).

2. Verfahren nach Anspruch 1, wobei die Adresse eines oder mehrerer Blöcke (215) ermittelt wird (303) unter Anwendung des einen oder der mehreren Parameter, die umfassen: eine Basisadresse eines ersten Blocks aus dem einen oder den mehreren Blöcken (215) in dem Speicher (202) und/oder eine Spaltenschrittweite und/oder Zellennummer X und/oder Reihenschrittweite und/oder Zellennummer Y und/oder Kanalschrittweite und/oder Zellennummer Z und/oder Streckungsspaltenschrittweite und/oder Streckungsoffset X, Streckungsreihenschrittweite und/oder Streckungsoffset Y, wobei X eine Anzahl an Blöcken in horizontaler Richtung des Bildes kennzeichnet, Y eine Anzahl an Blöcken in einer vertikalen Richtung des Bildes kennzeichnet, Z eine Anzahl an Blöcken pro Kanal in dem Bild kennzeichnet.

3. Verfahren nach Anspruch 1 oder 2, wobei eine Größe des einen oder der mehreren Blöcke (215) des Eingangsbildes (101), das in dem Speicher (202) gespeichert ist, auf der Basisarchitektur des Speichers (202) beruht.

4. Verfahren nach einem der Ansprüche 1 bis 3, wobei der eine oder die mehreren Blöcke (215) des Eingangsbildes (101), das in dem Speicher (202) gespeichert ist, auf einer Basisarchitektur des Speichers (202) und/oder einer Streckungsrate beruht.

5. Verfahren nach einem der Ansprüche 1 bis 4, wobei Abrufen (304) des einen oder der mehreren Blöcke (215) des Eingangsbildes (101) umfasst: Abrufen mehrerer Pixelwerte (104) des Eingangsbildes (101) entsprechend zu jedem Block des einen oder der mehreren Blöcke (215) des Eingangsbildes (101).

6. Verfahren nach einem der Ansprüche 1 bis 5, wobei Abrufen des einen oder der mehreren zerteilten Kerne (403) aus dem Speicher (202) umfasst:

   Identifizieren eines oder mehrerer Kernwerte (105), die dem einen oder den mehreren zerteilten Kernen (403) entsprechen, in dem zweiten Kern (401); und
   Abrufen des einen oder der mehreren Kernwerte (105), die dem einen oder den mehreren zerteilten Kernen (403) entsprechen, auf der Grundlage der Größe des einen oder der mehreren zerteilten Kerne (403).

7. Verfahren nach einem der Ansprüche 1 bis 6, wobei Erhalten (305) des Ausgangsbildes (101) umfasst:

   Erzeugen einer oder mehrerer Matrizen (404) durch Multiplizieren eines oder mehrerer Kernwerte (105) jedes des einen oder der mehreren zerteilten Kerne (403) mit mehreren Pixelwerten (104), die jedem Block des einen oder der mehreren Blöcke (215) des Eingangsbildes (101) entsprechen; und
   Addieren der einen oder der mehreren Matrizen (404), um das Ausgangsbild (103) zu ermitteln.

8. Computerlesbares Speichermedium, das Befehle speichert, die bei Ausführen durch einen Prozessor (203) eines Rechensystems (200) den Prozessor (203) veranlassen, das Verfahren nach einem der Ansprüche 1 bis 7 auszuführen.

9. Rechensystem (200) zur Ausführung einer Faltung in einem neuronalen Netzwerk mit variabler Streckungsrate, wobei das Rechensystem (200) aufweist:

   einen Prozessor (203); und
   einen Speicher (202), der kommunizierend mit dem Prozessor (203) verbunden ist, wobei der Speicher (203) die Prozessorbefehle speichert, die bei Ausführung den Prozessor (203) veranlassen zum:

   Empfangen (301) einer Größe eines ersten Kerns (12) und einer Streckungsrate;
   Ermitteln eines zweiten Kerns (401) auf der Grundlage des ersten Kerns (102) und der Streckungsrate;
   Unterteilen des zweiten Kerns (401) in einen oder mehrere zerteilte Kerne (403);
   Ermitteln (302) einer Größe des einen oder der mehreren zerteilten Kerne (403) auf der Grundlage der Größe des ersten Kerns (102) und/oder einer Basisarchitektur des zugehörigen Speichers (202) und/oder der Streckungsrate;
   Ermitteln (303) einer Adresse eines oder mehrerer Blöcke (215) eines Eingangsbildes (101) entsprechend zu jedem des einen oder der mehreren zerteilten Kerne (403) auf der Grundlage der Streckungsrate, und eines oder mehrerer Parameter, die mit einer Größe des Eingangsbildes (101) und des Speichers (202) assoziiert sind;
   Abrufen (304) des einen oder der mehreren Blöcke (215) des Eingangsbildes (101) auf der Grundlage der Adresse und des einen oder der mehreren zerteilten Kerne (403) aus dem Speicher (202); und

Erhalten (305) eines Ausgangsbildes (103) auf der Grundlage einer Faltung jedes des einen oder der mehreren zerteilten Kerne (403) und des einen oder der mehreren Blöcke (215) des Eingangsbildes (101).

10. Rechensystem (200) nach Anspruch 9, wobei der Prozessor (203) ausgebildet ist, die Adresse eines oder mehrerer Blöcke (215) unter Verwendung des einen oder der mehreren Parameter zu ermitteln (303), wobei die Parameter umfassen: eine Basisadresse eines ersten Blocks aus dem einen oder den mehreren Blöcken (215) in dem Speicher (202) und/oder eine Spaltenschrittweite und/oder Zellennummer X und/oder Reihenschrittweite und/oder Zellennummer Y und/oder Kanalschrittweite und/oder Zellennummer Z und/oder Streckungsspaltenschrittweite und/oder Streckungsoffset X, Streckungsreihenschrittweite und/oder Streckungsoffset Y, wobei X eine Anzahl an Blöcken in horizontaler Richtung des Bildes kennzeichnet, Y eine Anzahl an Blöcken in einer vertikalen Richtung des Bildes kennzeichnet, Z eine Anzahl an Blöcken pro Kanal in dem Bild kennzeichnet.

11. Rechensystem (200) nach Anspruch 9 oder 10, wobei der Prozessor (203) ausgebildet ist, die Größe des einen oder der mehreren Blöcke (215) des Eingangsbildes (101), das in dem Speicher (202) gespeichert ist, auf der Grundlage der Basisarchitektur des Speichers (202) zu ermitteln.

12. Rechensystem (200) nach einem der Ansprüche 9 bis 11, wobei der Prozessor (203) ausgebildet ist, den einen oder die mehreren Blöcke (215) des Eingangsbildes (101) in dem Speicher (202) auf der Grundlage einer Basisarchitektur des Speichers (202) und/oder einer Streckungsrate zu speichern.

13. Rechensystem (200) nach einem der Ansprüche 9 bis 12, wobei der Prozessor (203) ausgebildet ist, den einen oder die mehreren Blöcke (215) des Eingangsbildes (101) abzurufen (304) durch Ausführen von Schritten, die umfassen: Abrufen mehrerer Pixelwerte des Eingangsbildes (101), die jedem Block des einen oder der mehreren Blöcke (215) des Eingangsbildes (101) entsprechen.

14. Rechensystem (200) nach einem der Ansprüche 9 bis 13, wobei der Prozessor (203) ausgebildet ist, den einen oder die mehreren zerteilten Kerne (403) aus dem Speicher (202) durch Ausführen der Schritte abzurufen, die umfassen:

Identifizieren eines oder mehrerer Kernwerte (105), die dem einen oder den mehreren zerteilten Kernen (403) in dem zweiten Kern (401) entsprechen; und
Abrufen des einen oder der mehreren Kernwerte (105), die dem einen oder den mehreren zerteilten Kernen (403) entsprechen, auf der Grundlage der Größe des einen oder der mehreren zerteilten Kerne (403).

15. Rechensystem (200) nach einem der Ansprüche 9 bis 14, wobei der Prozessor (203) ausgebildet ist, das Ausgangsbild (103) durch Ausführen von Schritten zu erhalten (305), die umfassen:

Erzeugen einer oder mehrerer Matrizen (404) durch Multiplizieren eines oder mehrerer Kernwerte (105) jedes des einen oder der mehreren zerteilten Kerne (403) mit mehreren Pixelwerten (104), die jedem Block des einen oder der mehreren Blöcke (215) des Eingangsbildes (101) entsprechen; und
Addieren der einen oder der mehreren Matrizen (404), um das Ausgangsbild (103) zu ermitteln.

## Revendications

1. Procédé de convolution dans un réseau neuronal avec débit de dilatation variable, le procédé comprend les opérations suivantes :

recevoir (301), à l'aide d'un système informatique (200), la taille d'un premier noyau (102) et d'un débit de dilatation ;
déterminer, à l'aide du système informatique (200), un second noyau (401) fondé sur le premier noyau (102) et le débit de dilatation ;
diviser, à l'aide du système informatique (200), le second noyau (401) en un ou plusieurs noyaux désagrégés (403) ;
déterminer (302), à l'aide du système informatique (200), la taille d'un ou de plusieurs noyaux désintégrés (403) en fonction d'au moins l'un des éléments suivants : la taille du premier noyau (102), une architecture de base d'une mémoire (202) associée au système informatique (200) et le débit de dilatation;
déterminer (303), à l'aide du système informatique (200), l'adresse d'un ou plusieurs blocs (215) d'une image d'entrée (101) correspondant à chacun du ou des noyaux désintégrés (403) en fonction du débit de dilatation et d'un ou plusieurs paramètres associés à la taille de l'image d'entrée (101) et de la mémoire (202) ;

extraire (304), à l'aide du système informatique (200), un ou plusieurs blocs (215) de l'image d'entrée (101) en fonction de l'adresse et d'un ou plusieurs noyaux désintégrés (403) de la mémoire (202) ; et

obtenir (305), à l'aide du système informatique (200), une image de sortie (103) fondée sur la convolution de chacun du ou des noyaux désintégrés (403) et d'un ou plusieurs blocs (215) de l'image d'entrée (101).

**2.** Procédé selon la revendication 1, dans lequel l'adresse d'un ou plusieurs blocs (215) est déterminée (303) à l'aide d'un ou plusieurs paramètres comprenant au moins l'adresse de base d'un premier bloc parmi le ou les blocs (215) dans la mémoire (202), l'enjambement de colonne, le numéro de cellule X, l'enjambement de rangée, le numéro de cellule Y, l'enjambement de canal, le numéro de cellule Z, l'enjambement de la colonne de dilatation, le décalage de dilatation X, l'enjambement de la rangée de dilatation, le décalage de dilatation Y, où X indique le nombre de blocs dans une direction horizontale de l'image, Y indique le nombre de blocs dans une direction verticale de l'image, Z indique le nombre de blocs par canal dans l'image.

**3.** Procédé selon les revendications 1 ou 2, dans lequel la taille d'un ou plusieurs blocs (215) de l'image d'entrée (101) stockée dans la mémoire (202) est fondée sur l'architecture de base de la mémoire (202).

**4.** Procédé selon l'une des revendications 1 à 3, dans lequel le ou les blocs (215) de l'image d'entrée (101) stockée dans la mémoire (202) sont fondés sur au moins l'un des éléments suivants : une architecture de base de la mémoire (202) et un débit de dilatation.

**5.** Procédé selon l'une des revendications 1 à 4, dans lequel l'extraction (304) d'un ou plusieurs blocs (215) de l'image d'entrée (101) comprend l'extraction d'une pluralité de valeurs de pixels (104) de l'image d'entrée (101) correspondant à chaque bloc d'un ou plusieurs blocs (215) de l'image d'entrée (101).

**6.** Procédé selon l'une des revendications 1 à 5, dans lequel l'extraction d'un ou de plusieurs noyaux désintégrés (403) de la mémoire (202) comprend les opérations suivantes :

identifier une ou plusieurs valeurs de noyau (105) correspondant à un ou plusieurs noyaux désintégrés (403) dans le second noyau (401) ; et

extraire une ou plusieurs valeurs de noyau (105) correspondant à un ou plusieurs noyaux désintégrés (403) en fonction de la taille d'un ou plusieurs noyaux désintégrés (403).

**7.** Procédé selon l'une des revendications 1 à 6, dans lequel l'obtention (305) de l'image de sortie (101) comprend les opérations suivantes :

générer une ou plusieurs matrices (404) en multipliant une ou plusieurs valeurs de noyau (105) de chacun des noyaux désintégrés (403) avec une pluralité de valeurs de pixels (104) correspondant à chaque bloc du ou des blocs (215) de l'image d'entrée (101) ; et

ajouter une ou plusieurs matrices (404) pour déterminer l'image de sortie (103).

**8.** Support de stockage lisible par ordinateur stockant des instructions qui, lorsqu'elles sont exécutées par un processeur (203) d'un système informatique (200), amènent le processeur (203) à exécuter le procédé selon l'une des revendications 1 à 7.

**9.** Système informatique (200), pour effectuer une convolution dans un réseau neuronal avec un débit de dilatation variable, le système informatique (200) comprend :

un processeur (203) ; et

une mémoire (202) couplée de manière communicative au processeur (203), dans laquelle la mémoire (202) stocke les instructions du processeur qui, lors de l'exécution, amènent le processeur (203) à :

recevoir (301) la taille d'un premier noyau (102) et un débit de dilatation ;

déterminer un second noyau (401) fondé sur le premier noyau (102) et le débit de dilatation ;

diviser le second noyau (401) en une ou plusieurs amandes désagrégées (403);

déterminer (302) la taille d'un ou de plusieurs noyaux désintégrés (403) en fonction d'au moins l'un des éléments suivants : la taille du premier noyau (102), une architecture de base de la mémoire (202) associée et le débit de dilatation;

déterminer (303) l'adresse d'un ou plusieurs blocs (215) d'une image d'entrée (101) correspondant à chacun des noyaux désintégrés (403) en fonction du débit de dilatation et d'un ou plusieurs paramètres associés à la taille de l'image d'entrée (101) et de la mémoire (202) ;

extraire (304) le ou les blocs (215) de l'image d'entrée (101) en fonction de l'adresse et du ou des noyaux désintégrés (403) dans la mémoire (202) ; et

obtenir (305) une image de sortie (103) fondée sur la convolution de chacun des un ou plusieurs noyaux désintégrés (403) et d'un ou plusieurs blocs (215) de l'image d'entrée (101).

**10.** Système informatique (200) selon la revendication 9, dans lequel le processeur (203) est configuré pour déterminer (303) l'adresse d'un ou de plusieurs blocs (215) à l'aide d'un ou de plusieurs paramètres comprenant au moins l'adresse de base d'un premier bloc parmi le ou les blocs (215) dans la mémoire (202), l'enjambement de la colonne, le numéro de la cellule X, l'enjambement de la rangée, le numéro de la cellule Y, l'enjambement du canal, le numéro de la cellule Z, l'enjambement de la colonne de dilatation, le décalage de dilatation X, l'enjambement de la rangée de dilatation, le décalage de dilatation Y, où X indique le nombre de blocs dans une direction horizontale de l'image, Y indique le nombre de blocs dans une direction verticale de l'image, Z indique le nombre de blocs par canal dans l'image.

**11.** Système informatique (200) selon les revendications 9 ou 10, dans lequel le processeur (203) est configuré pour déterminer la taille d'un ou plusieurs blocs (215) de l'image d'entrée (101) stockée dans la mémoire (202) en fonction de l'architecture de base de la mémoire (202).

**12.** Système informatique (200) selon l'une des revendications 9 à 11, dans lequel le processeur (203) est configuré pour stocker un ou plusieurs blocs (215) de l'image d'entrée (101) dans la mémoire (202) en fonction d'au moins une architecture de base de la mémoire (202) et d'un débit de dilatation.

**13.** Système informatique (200) selon l'une des revendications 9 à 12, dans lequel le processeur (203) est configuré pour extraire (304) le ou les blocs (215) de l'image d'entrée (101) en exécutant des étapes comprenant l'extraction d'une pluralité de valeurs de pixels de l'image d'entrée (101) correspondant à chaque bloc du ou des blocs (215) de l'image d'entrée (101).

**14.** Système informatique (200) selon l'une des revendications 9 à 13, dans lequel le processeur (203) est configuré pour extraire un ou plusieurs noyaux désintégrés (403) de la mémoire (202) en exécutant des étapes comprenant :

l'identification d'une ou plusieurs valeurs de noyau (105) correspondant à un ou plusieurs noyaux désintégrés (403) dans le second noyau (401) ; et

l'extraction d'une ou plusieurs valeurs de noyau (105) correspondant à un ou plusieurs noyaux désintégrés (403) en fonction de la taille d'un ou plusieurs noyaux désintégrés (403).

**15.** Système informatique (200) selon l'une des revendications 9 à 14, dans lequel le processeur (203) est configuré pour obtenir (305) l'image de sortie (103) en exécutant des étapes comprenant :

la génération d'une ou plusieurs matrices (404) en multipliant une ou plusieurs valeurs de noyau (105) de chacun des un ou plusieurs noyaux désintégrés (403) avec une pluralité de valeurs de pixel (104) correspondant à chaque bloc du ou des blocs (215) de l'image d'entrée (101) ; et

l'ajout de la ou des matrices (404) pour déterminer l'image de sortie (103).

101

| 3 | 0 | 1 | 2 | 7 | 4 |
|---|---|---|---|---|---|
| 1 | 5 | 8 | 9 | 3 | 1 |
| 2 | 7 | 2 | 5 | 1 | 3 |
| 0 | 1 | 3 | 1 | 7 | 8 |
| 4 | 2 | 1 | 6 | 2 | 8 |
| 2 | 4 | 5 | 2 | 3 | 9 |

*

102

| 1 | 0 | -1 |
|---|---|----|
| 1 | 0 | -1 |
| 1 | 0 | -1 |

105

=

103

| -5 | -4 | 0 | 8 |
|----|----|---|---|
| -10 | -2 | 2 | 3 |
| 0 | -2 | -4 | -7 |
| -3 | -2 | -3 | -16 |

104

**FIGURE 1A**

(3 * 1) + (0 * 0) + (1 * -1) + (1 * 1) + (5 * 0) + (8 * -1) + (2 * 1) + (7 * 0) + (2 * -1) = -5

(0 * 1) + (1 * 0) + (2 * -1) + (5 * 1) + (8 * 0) + (9 * -1) + (7 * 1) + (2 * 0) + (5 * -1) = -4

**FIGURE 1B**

FIGURE 1C

101

| 0 | 0 | 0 | 0 | 0 | 0 |
| 0 | 5 | 8 | 9 | 3 | 0 |
| 0 | 7 | 2 | 5 | 1 | 0 |
| 0 | 1 | 3 | 1 | 7 | 0 |
| 0 | 2 | 1 | 6 | 2 | 0 |
| 0 | 0 | 0 | 0 | 0 | 0 |

104

**FIGURE 1D**

A COMPUTING SYSTEM **200**

| I/O INTERFACE **201** | MEMORY **202** | PROCESSOR **203** |

DATA **204**

| INPUT AND OUTPUT DATA **205** | DILATION DATA **206** |

| ADDRESS DATA **207** | OTHER DATA **208** |

MODULES **209**

| SIZE DETERMINATION MODULE **210** | ADDRESS GENERATION MODULE **211** |

| READ WRITE MODULE **212** | CONVOLUTION MODULE **213** |

OTHER MODULE **214**

**FIGURE 2A**

FIGURE 2B

300

| RECEIVING SIZE OF A FIRST KERNEL AND A DILATION RATE | 301 |

| DETERMINING SIZE OF ONE OR MORE DISINTEGRATED KERNELS | 302 |

| DETERMINING ADDRESS OF ONE OR MORE BLOCKS OF AN INPUT IMAGE | 303 |

| FETCHING THE ONE OR MORE BLOCKS OF THE INPUT IMAGE | 304 |

| OBTAINING AN OUTPUT IMAGE | 305 |

**FIGURE 3**

Dilation rate of 2

Dilation rate of 5

101

105

105

401

105

EP 3 678 088 B1

26

FIGURE 4A

FIGURE 4B

FIGURE 4C

402

| Dilation rate | | Size of one or more Disintegrated Kernels |
|---|---|---|
| 8*n + 0 | 8, 16, 24, 32, ... | 1x1 kernel |
| 8*n + 1 | 9, 17, 25, 33, ... | 3x3 kernel |
| 8*n + 2 | 10, 18, 26, 34, ... | 3x5 kernel |
| 8*n + 3 | 11, 19, 27, 35, ... | 4x7 kernel |
| 8*n + 4 | 12, 20, 28, 36, ... | 1x5 kernel |
| 8*n + 5 | 13, 21, 29, 37, ... | 3x6 kernel |
| 8*n + 6 | 14, 22, 30, 38, ... | 3x7 kernel |
| 8*n + 7 | 15, 23, 31, 39, ... | 4x8 kernel |

FIGURE 4D

EP 3 678 088 B1

Column Stride = 1
Row Stride = 3
Channel Stride = 3 * 5 = 15
Dilation Column Stride = 1 * 1 = 1
Dilation Row Stride = 3 * 2 = 6
Base Address = 0

| Counters | Max Value |
|---|---|
| Cell Number X | 1 |
| Cell Number Y | 1 |
| Cell Number Z | - |
| Dilation Offset X | 3 |
| Dilation Offset Y | 3 |

| Read Cycles-> | 0th | 1st | 2nd | 3rd | 4th | 5th | 6th | 7th | 8th |
|---|---|---|---|---|---|---|---|---|---|
| Cell Number X | 0 | 0 | 0 | 0 | 0 | 0 | 0 | 0 | 0 |
| Cell Number Y | 0 | 0 | 0 | 0 | 0 | 0 | 0 | 0 | 0 |
| Cell Number Z | 0 | 0 | 0 | 0 | 0 | 0 | 0 | 0 | 0 |
| Dilation Offset X | 0 | 1 | 2 | 0 | 1 | 2 | 0 | 1 | 2 |
| Dilation Offset Y | 0 | 0 | 0 | 1 | 1 | 1 | 2 | 2 | 2 |
| Generated Address | 0 | 1 | 2 | 6 | 7 | 8 | 12 | 13 | 14 |

**FIGURE 4E**

Dilation Rate = 8

401

105

403

**FIGURE 4F**

Dilation Rate = 12

401

403

105

105

**FIGURE 4G**

FIGURE 4H

FIGURE 4I

INPUT DEVICE
510

OUTPUT
DEVICE
511

REMOTE
DEVICES 512

I/O INTERFACE
501

PROCESSOR
502

NETWORK
INTERFACE
503

COMMUNICATION
NETWORK 509

STORAGE INTERFACE 504

MEMORY 505

USER INTERFACE 506

OPERATING SYSTEM 507

WEB SERVER 508

USER EQUIPMENT (UE) 102

**FIGURE 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018081089 A1

- US 10067509 B1

**Non-patent literature cited in the description**

- **CHEN et al.** *DeepLab: Semantic Image Segmentation with Deep Convolutional Nets, Atrous Convolution, and Fully Connected CRFS*

- **YU et al.** *Multi-Scale Context Aggregation by Dilated Convolutions*